# EUROPEAN PATENT APPLICATION

(11) **EP 0 697 355 A1**
(43) Date of publication of application: **21.02.1996**
(21) Application number: 95202192.1
(22) Date of filing: 11.08.1995
(51) Int. Cl.: B65G 57/30, B65H 29/42

(54) **Apparatus for lifting plate-shaped item, particularly for a ceramic tiles stacking machine**

(30) Priority: 19.08.1994 IT MO940121
(71) Applicant: SOCIETA' ARTIGIANA COSTRUTTORI SMALTATRICI S.A.C.S. S.P.A., I-42019 Scandiano (Reggio Emilia) (IT)
(72) Inventor: Turini, Armando, I-42100 Reggio Emilia (IT)
(74) Representative: Gardi, Giuliano

(57) **Abstract**

The stacking machine is devoted to obtaining greater productivity and less wear in the stacking of plate-shaped materials, for example ceramic tiles, by adopting, below the stacking station equipped with means (5, 6) of gripping and retaining, four screw elements (8, 9), the threads (10) of which, in rotation, receive and lift the plate-shaped material (2) which is conveyed, between them, by the line (1) in continuous movement, the axis of said screw elements being inclined, in the opposite direction to that of the movement of the material by an amount equal to the inclination of the helix of the threads (10) in such a manner that the same are arranged, at the entrance and at the exit, in corresponding horizontal planes; the machine is used in ceramics factories or in other industries, for example for the packaging of plate-shaped products.

## Description

The invention relates to a lifting apparatus particularly associated to a stacking machine for plate-shaped material, such as ceramic tiles, in other words a machine by means of which stacks of flat objects originating from a transport line can be formed.

The state of the art comprises in particular two types of stacking machines: a first machine, subject of the patent of invention IT-B-1172719 of the same applicant, in which the lifting of the ceramic tiles is achieved by means of screws of rectangular section of two pairs of vertical cylindrical helical screws rotating in relation to one another in phase which are arranged at the sides of the conveying line in the region of the stacking station, and a second machine, subject of the subsequent utility model IT-U-206.510, also of the same applicant, in which the thread of the four helices is substituted by a series of rollers arranged along the route of each helix to transform the sliding movement into a rolling movement.

Moreover, the first machine has the disadvantage of presenting to the tile arriving in the stacking station four essentially punctiform contact zones and of rising, so that, as a result of high transport speeds such as those which are currently required, impacts result which give rise to chipping of the edges of the tiles and, in general, to phenomena of heavy wear which involve both the tile and, in particular, the threads; furthermore, the four bearing points do not in practice constitute a stable support, with consequent slipping, falling and breakage of some of the tiles.

Therefore, the second machine was proposed, in which the substitution of the rollers for the thread of the helix made it possible to obtain, in place of punctiform contacts, linear zones of contact, even if much reduced, as well as less wear at the same speed by virtue of the transformation of the friction from sliding to rolling, without, however, solving the problem of the stability because of the discontinuity of the surface of the helix constituted by a succession of rollers which sometimes gives rise to the tiles stopping and falling; furthermore, the second machine proved to be more expensive.

This prior art is susceptible of considerable improvements with regard to the possibility of eliminating or - in any case - of drastically reducing the disadvantages indicated above.

The above gives rise to the necessity of solving the technical problem of inventing a lifting apparatus connectable with a stacking machine for plate-shaped material, which can also be other than ceramic tiles, which offers the manufactured article originating from the transport line, even at very high speed, in the stacking station, four lifting supports each constituted by a contact which is larger and without a tendency to rise; this is done in such a manner as to obtain a stable support so as to prevent slipping, skipping and falling of the tiles and furthermore to eliminate chipping and perceptible wear.

According to a first aspect of the present invention, a lifting apparatus is provided comprising four cylindrical helical screw elements, rotatably driven each around a respective longitudinal axis and defining a pair of vertical planes parallel to each other and located at opposite sides with respect to a conveying line for plate-shaped items, said conveying line defining a conveying plane for said plate-shaped items, characterised in that, each screw element has an inlet portion of its respective thread substantially co-planar with said conveying plane.

In a particularly advantageous embodiment, the threads have a rectangular cross-section and define each a single-coil screw.

In a further particularly advantageous embodiment, the axis of each screw elements have an angle of inclination in said vertical plane corresponding to the respective helix angle of each screw element.

In a further particularly advantageous embodiment, said screw elements have the same helix angle.

In a further particularly advantageous embodiment, the axis of each screw element is inclined in a direction opposite to the direction of advance of said conveyor line.

In a further particularly advantageous embodiment, each screw element has an outlet portion of its respective thread substantially parallel to the conveying line and located above the conveying line.

In a further particularly advantageous embodiment, the outlet portions of said screw elements cooperate with stacking means located above said outlet portions.

Accoring to a second aspect of the present invention, a method is provided for lifting flat items from a conveying line, comprisig lifting along a vertical direction said flat items by means of screw elements bi-laterally disposed with respect to a conveying line defining a longitudinally oriented conveying direction, characterized in that, during lifting, said flat items are also horizontally transferred from a lower inlet position on said conveying line to an upper outlet position above said lower inlet position and longitudinally distanced apart from said inlet position, and in that during lifting and transferring said flat items are kept in continuous contact with surface portions of the threads of said screw elements.

The advantages obtained by this invention are: elimination of the risk of chipping of the product if fragile, even at high speed, by virtue of the substantially flat contact of each screw element; drastic reduction of the wear of the product and of the threads, given the much greater contact surface; much greater bearing stability and therefore prevention of slipping and falling; much greater productivity by virtue of the increase allowed in the speed of rotation of the four screw elements and of translation of the conveying line; furthermore, elimination of stop members such as pneumatic cylinders to prevent the manufactured article going beyond the limit of formation of the stack, members which were made necessary (in the prior art) because the tiles, on contact with the four screw elements with vertical axis which were inclined with regard to the horizontal skipped and therefore tended to go beyond the limit of the station with consequent blockages and necessity to stop the line.

One embodiment of the invention is illustrated, solely by way of example, in the five sheets of drawings attached, in which:

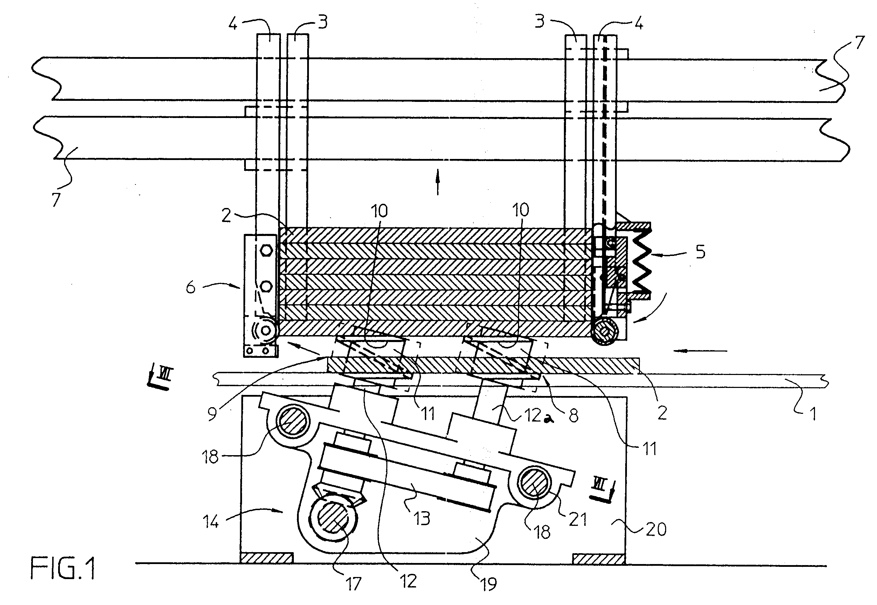

Figure 1 is a lateral view, partially in section, of the machine according to the invention, in the configuration at the beginning of the cycle of lifting a tile which has arrived by conveying on a pair of belts;

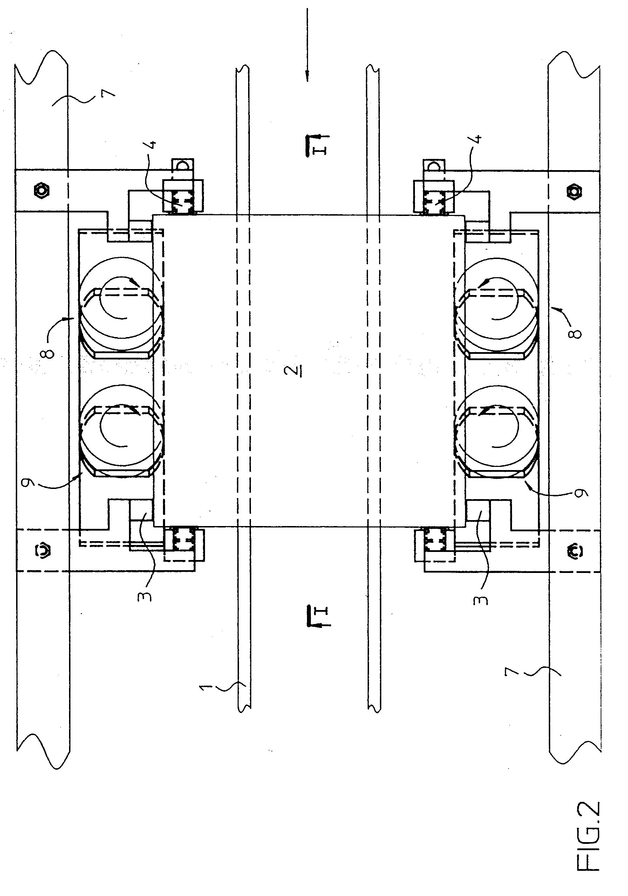

Figure 2 is the plan view of the machine in Figure 1, without the stacking guides;
Figure 3 is the vertical, partial and enlarged section of one of the angular oscillating devices for gripping and retaining the tile at the base of the stack being formed;
Figure 4 is the plan view, partially in section, of Figure 3;
Figures 5 and 6 are the projections, similar to those in Figures 3 and 4, relating to the pair of fixed devices which cooperate in gripping and retaining the bottom tile of the stack on the opposite side to that in Figures 3 and 4;
Figure 7 is the section VII-VII in Figure 1 to show the transmission of the movement by steps to the four screw elements constituting the device for lifting the tiles.

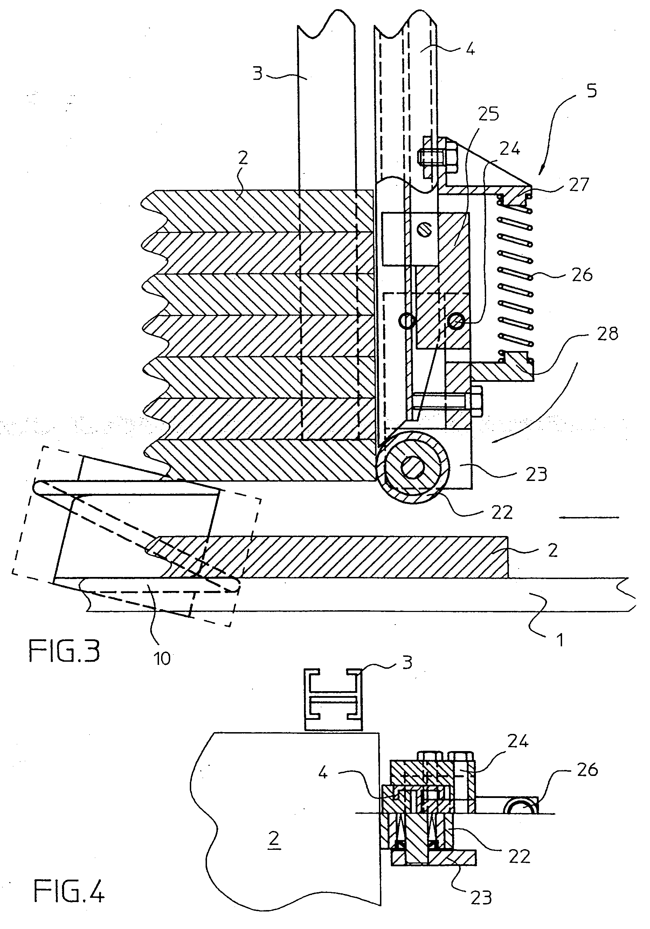

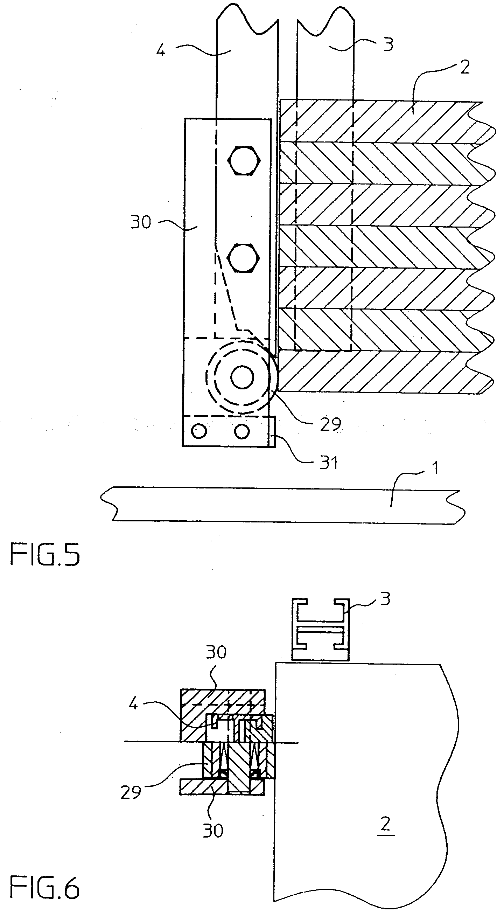

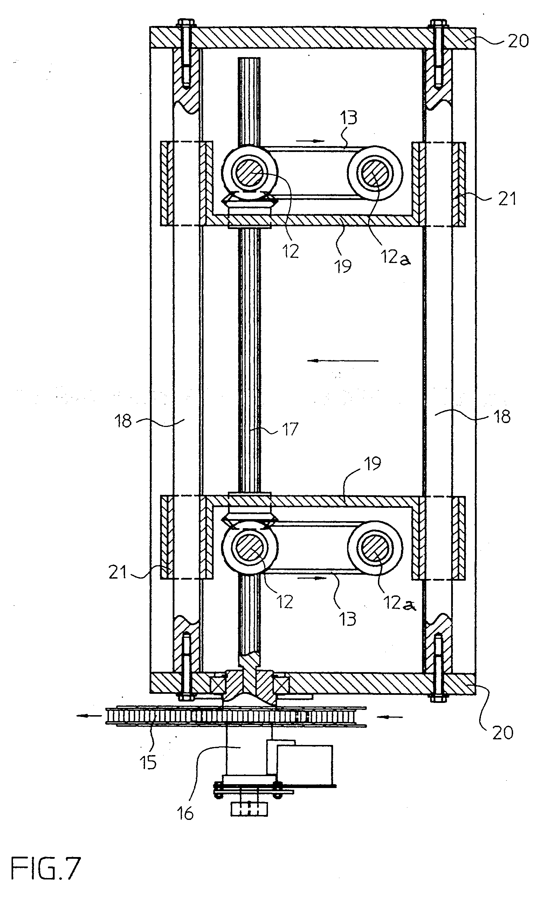

1 indicates the conveying line for the plate-shaped material 2 to be stacked in the stacking station in a support and guide structure formed by two series of uprights, each constituted by four elements: front and rear lateral 3, front and rear frontal 4; 5 indicates a pair of oscillating front devices for gripping and retaining the plate-shaped element or tile 2 constituting the bottom of the stack; 6 indicates a pair of fixed rear devices for gripping and retaining the bottom tile; 7 indicates upper framework elements on which the structure of the stacking station is suspended; 8 and 9 indicate two lateral pairs, front and rear respectively, of screw elements, the axis of which is inclined, with regard to the vertical, in the opposite direction with regard to the direction of flow of the tiles 2, in the vertical lateral plane parallel to the vertical longitudinal plane of the line 1 and containing the axes of the same elements, through an angle corresponding to that of inclination of the rectangular thread 10 of the manoeuvring helix fixed on the cylindrical body 11 keyed on a respective shaft 12, 12a, with the latter, advanced towards the arrival of the plate-shaped material, being longer than the former in such a manner that the entrance and the exit of the associated threads 10 of the two screw elements are coplanar horizontally, each screw element 8, 9 being developed around the associated cylinder 11; 13 indicates a toothed belt for the synchronous transmission, from the shafts 12 to the shafts 12a, of the movement originating, by means of two angular transmissions 14, from a gear motor (not shown) which actuates (Figure 7), via a belt or chain transmission 15, an intermitting device 16 taking care of transmitting, to said screw elements 8, 9, a rotation of 1 revolution on the arrival on them of each tile in the predetermined coupling position; 17 indicates a splined shaft for the transmission of the movement from the intermitting device 16 to the four shafts 12, 12a; 18 indicates two guide rods, transversely orientated with respect to a longitudinal vertical plane of the conveying line 2, having respective axes lying in a plane inclined below the horizontal by an angle corresponding to that of the helix of the screw elements 8, 9; 19 indicates two longitudinal support structures, each for supporting a front screw element 8 and a rear screw element 9; 20 indicates two sides of the base structure which support the guide rods 18 for transverse format change of the tiles 2 which can be brought about by means of devices (not shown) by moving together and moving apart the structures 19 which are coupled slidingly on said transverse guide rods 18 by means of sleeves 21; 22 (Figure 3) indicates a pair of front oscillating free-wheels each fixed to the lower end of a oscillating lever 23, pivoted at the top on the pin 24 of the support 25 fixed to an associated upright 4, these wheels having the function of gripping and retaining the rear edge of the bottom tile, as it is lifted by the four screw elements 8, 9; 26 indicates the associated pair of vertical helical springs each inserted between a pair of guides 27, 28 respectively forming part of the associated front upright 4 and of the associated oscillating lever 23; 29 indicates (Figure 5) a pair of rear free wheels, similar to the pair of front free wheels 22 but not oscillating, supported on the associated uprights 4 by means of a bracket 30 to complete the means of gripping and retaining the plate-shaped material; 31 indicates a pair of striker elements for the front edge of the tile 2 in the position when the beginning of lifting has taken place, in the region of the gripping of the pair of rear free wheels 29 above in the stacking station, to constitute a reference for the most advanced point of the same station.

The functioning is as follows: the plate-shaped body 2, advancing continuously on the conveying line 1 is supported at a level just above the plane defined by the first lower inlet section of the thread 10 of each screw element 8, 9; when the plat-shaped body 2 arrives in the position of coupling which is substantially simultaneous with the inlet portions of the four threads, a detection system (not shown) orders the simultaneous start of the rotation of the two pairs of screw elements 8, 9, bringing about the coupling contact in the absence of relative speed between the upper surfaces of the threads 10 and the corresponding zones of the lower surface of the plate-shaped body 2; during the synchronous rotation of the shafts 12, 12a, the simultaneous advance and lifting of the plate-shaped body takes place until reaching respectively the striker 31 and clamping between the two pairs of front 22 and rear 29 free wheels of the lifting station; in the final section of the rotation of one revolution of the four screw elements, the upper face of the plate-shaped element comes into contact with the bottom of the bottom tile of the stack, thus bringing about the lifting of the same stack by one step corresponding to the thickness of the same element.

In the practical embodiment, the materials, the dimensions, the executive details, may be different from those indicated but technically equivalent to these without for this reason leaving the scope of the present invention, as defined by the appended claims.

Thus, it will be possible for the members and the means extraneous to the screw elements 8, 9 to be different to those described and illustrated.

Furthermore, any inclinations imparted to the axes of the four screw elements 8, 9 in the associated lateral planes, with regard to the vertical, through angular values slightly different to that of inclination of the helix of the thread 10, even affording less advantage, are, however, to be included within the scope of the present invention.

Finally, the condition of coplanarity in associated horizontal planes could also be achieved, even if less conveniently because of mechanical complications, by adopting shafts 12, 12a of equal length.

Also, the step-by-step rotation device with mechanical intermitting device could be replaced by an electronic device.

## Claims

1. Apparatus for lifting plate-shaped items, particularly for a ceramic tiles stacking machine, comprising four cylindrical helical screw elements (8, 9), rotatably driven around respective longitudinal axes defining a pair of vertical planes parallel to each other and located at opposite sides with respect to a conveying line (1) for plate-shaped items (2), said conveying line defining a conveying plane for said plate-shaped items (2), characterised in that, each screw element (8, 9) has an inlet portion of its respective thread (10) substantially co-planar with said conveying plane.

2. Apparatus according to claim 1, wherein each said thread (10) has a rectangular cross-section defining a single-coil screw and is fixed on a respective cylindrical body (11).

3. Apparatus according to claim 1, wherein the axis of each screw element (8, 9) has an angle of inclination in said vertical plane corresponding to the respective helix angle of each screw element (8; 9).

4. Apparatus according to claim 3, wherein said screw elements (8, 9) have the same helix angle.

5. Apparatus according to any one of claims 1 to 4, wherein the axis of each screw element (8, 9) is inclined in a direction opposite to the direction of advance of said conveying line (1).

6. Apparatus according to any one of claims 1 to 5, wherein each screw element (8, 9) has an outlet portion of its respective thread substantially parallel to the conveying line (1) and located above the conveying line (1).

7. Apparatus according to claim 6, wherein the outlet portions of said screw elements (8, 9) co-operate with stacking means (3, 4, 22 to 31) located above said outlet portions and suspended on an upper framework (7).

8. Apparatus according to claim 2, wherein each cylindrical body (11) has its lower end connected to a driving shaft (12, 12a), the driving shaft (12a) located forward in the direction of movement of the plate-shaped items (2) being longer than that located backwards.

9. Apparatus according to claim 8, wherein the driving shafts (12, 12a) of each cylindrical body (11) are rotatably supported on a longitudinal structure (19) which is adjustably connected to transverse guide means (18) defining a plane inclined by an angle corresponding to the angle of inclination of the helix of the screw elements (8, 9).

10. Apparatus according to claim 9, wherein the transverse guide means comprises guide rods (18) supported on sides (20) of a base structure.

11. Apparatus according to claim 7, wherein said stacking means comprises at a respective bottom end two pairs of free-wheels (22, 29), a pair of front free-wheels (22) and a pair of rear free-wheels (29), for gripping and retaining the plate-shaped items (2); a pair of striker elements (31) being provided below the pair of rear free-wheels (29) for limiting the advance of the item (2) towards said stacking means (3, 4, 22 to 31).

12. Apparatus according to claim 11, wherein said pair of front free-wheels (22) is supported at a respective lower end of an oscillating lever (23) pivoted on a pin (24) of a support (25) fixed to a corresponding upright (4) of said stacking means (3, 4, 22 to 31), said oscillating lever (23) being moved outwardly by the lifting of the plate-shaped item (2) against the reaction of an associated spring (26) inserted between a guide (28) on said oscillating lever (23) and a guide (27) on said upright (4).

13. Method for lifting flat items from a conveying line, comprisig lifting along a vertical direction said flat items (2) by means of screw elements (8, 9) bi-laterally disposed with respect to a conveying line defining a longitudinally oriented conveying direction, characterized in that, during lifting, said flat items (2) are also horizontally transferred from a lower inlet position on said conveying line (1) to an upper outlet position above said lower inlet position and longitudinally distanced apart from said inlet position, and in that during lifting and transferring said flat items (2) are kept in continuous contact with surface portions of the threads (10) of said screw elements (8, 9).
